# EUROPÄISCHE PATENTSCHRIFT

(11) **EP 0 386 466 B1**
(45) Veröffentlichungstag und Bekanntmachung des Hinweises auf die Patenterteilung: **29.11.1995**
(21) Anmeldenummer: 90102137.8
(22) Anmeldetag: 03.02.1990
(51) Int. Cl.: H04J 3/14, H04J 14/02

(54) **Optisches Nachrichtenübertragungssystem für den Teilnehmeranschlussbereich**
Optical information transmission system in the subscriber region
Système optique de transmission d'information dans la zone d'abonné

(30) Priorität: 08.03.1989 DE 3907497
(43) Veröffentlichungstag der Anmeldung: 12.09.1990
(73) Patentinhaber: Alcatel SEL Aktiengesellschaft, D-70435 Stuttgart (DE)
(72) Erfinder: Matt, Hans Jürgen, Dr., D-7148 Remseck 1 (DE)
(74) Vertreter: Kugler, Hermann, Dipl.-Phys.

(56) Entgegenhaltungen:
- EP-A- 0 193 190
- EP-A- 0 297 504
- WO-A-88/09093
- DE-A- 3 010 802
- US-A- 4 592 043
- JOURNAL OF LIGHTWAVE TECHNOLOGY Bd. LT-3, Nr. 1, 1. Februar1985, NEW YORK (US) Seiten 121 - 127; SHINICHI TAMURA ET AL.: 'Optical code-multiplex transmission by gold sequences.'
- REVIEW OF THE ELECTRICAL COMMUNICATION LABORATORIES Bd. 32, Nr. 4, 1.Juni 1984, TOKYO (JP) Seiten 563 - 570; RYUICHI WATANABE ET AL.: 'Optical subscriber loop system for business premises'

## Beschreibung

Die Erfindung betrifft ein System nach dem Oberbegriff des Patentanspruchs 1. Ein solches System ist bekannt aus DE-A1-35 07 064, Fig. 2. Bei dem dort gezeigten System werden die von der Zentrale zu einer Gruppe von Teilnehmern zu übertragenden Signale als digitale Signale übertragen, und das elektrische Multiplexsignal, zu dem sie in der Zentrale zusammengefaßt werden, ist ein Zeitmultiplex-Signal. In der entgegengesetzten Richtung, nämlich von der Gruppe von Teilnehmern zu der Zentrale werden die Signale dadurch übertragen, daß sie mit teilnehmerindividuellen Wellenlängen über die teilnehmerindividuellen Lichtwellenleiter zum gemeinsamen Lichtwellenleiter und von dort über diesen zur Zentrale übertragen werden. Für die verschiedenen Richtungen werden verschiedene Wellenlängen verwendet, so daß dieselben Lichtwellenleiter, die für die Übertragung in eine Richtung verwendet werden, auch für die Übertragung in die entgegengesetzte Richtung verwendet werden und die Richtungstrennung im Wellenlängenmultiplex erfolgt.

Die bei dem bekannten System in der Zentrale und bei den Teilnehmern vorhandenen Multiplex- bzw. Demultiplexeinrichtungen zur Bildung bzw. Auflösung des Zeitmultiplexsignals erfordern einen beträchtlichen Schaltungsaufwand, was einer kostengünstigen Realisierung des bekannten Systems im Wege steht.

Es ist daher die Aufgabe der Erfindung, ein anderes, billigeres System der eingangs genannten Art anzugeben.

Die Aufgabe wird wie im Patentanspruch 1 angegeben gelöst. Weiterbildungen ergeben sich aus den Unteransprüchen.

Aus DE-A-30 10 802 ist es bekannt, verschiedene Nachrichtenbänder Trägern verschiedener Frequenzen aufzumodulieren und die modulierten Träger im Frequenzmultiplex über einen Lichtwellenleiter zu übertragen. Es gibt dort außerdem einen Hinweis, das Übertragungsverfahren in der Teilnehmeranschlußebene eines Breitband-Kommunikationsnetzes zu verwenden. Mit der Übertragung von Nachrichtenbändern in Breitband-Kommunikationsnetzen befaßt sich die vorliegende Anmeldung nicht, sondern mit der Übertragung von teilnehmerindividuellen Signalen zwischen einer Zentrale und einer Vielzahl von Teilnehmern in beiden Übertragungsrichtungen.

Die Erfindung wird nun anhand der Zeichnungen beispielsweise näher erläutert.

Es zeigen:
- Fig. 1: den Grundaufbau des erfindungsgemäßen Systems,
- Fig. 2: eine Modulations- und Multiplexeinrichtung zur Aufbereitung des die von der Zentrale zu der Gruppe von Teilnehmern zu übertragenden Fernsprech- und Datensignale enthaltenden Frequenzmultiplexsignals,
- Fig. 3: eine teilnehmerseitige Demodulationseinrichtung und Modulationseinrichtung für Fernsprech- und Datensignale,
- Fig. 4: eine in der Zentrale pro Teilnehmer vorhandene Demodulationseinrichtung für Fernsprech- und Datensignale,
- Fig. 5: eine schematische Aufteilung des Frequenzmultiplexsignals in Teilbänder,
- Fig. 6: eine Anordnung mehrerer Elektrisch-optisch-Wandler zur Umwandlung der elektrischen Teilbänder in optische Signale,
- Fig. 7: eine erste Schutzvorrichtung zur Feststellung einer Unterbrechung der Lichtwellenleiter-Strecke und
- Fig. 8: eine zweite, alternative Schutzvorrichtung zur Feststellung einer Unterbrechung der Lichtwellenleiter-Strecke.

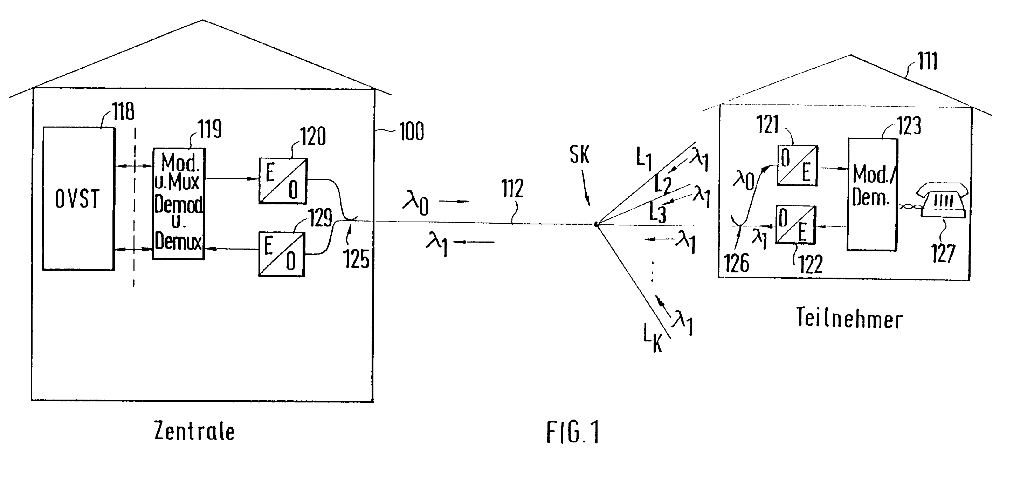

In Fig. 1 zeigt die linke Hälfte die in der Zentrale für eine Gruppe von Teilnehmern vorhandenen Einrichtungen und die rechte Hälfte die bei einem Teilnehmer dieser Gruppe vorhandenen Einrichtungen. Die Zentrale, als Haus dargestellt, trägt das Bezugszeichen 100, und die bei einem Teilnehmer vorhandenen Einrichtungen, die als in einem einzigen Haus befindlich dargestellt sind, tragen als Gesamtheit das Bezugszeichen 111. Von der Zentrale 100 führt ein Lichtwellenleiter 112, der den zu einer Gruppe gehörenden Teilnehmern gemeinsam ist, zu einem Sternkoppler SK, und von dort führen teilnehmerindividuelle Lichtwellenleiter L₁ bis Lₖ jeweils zu einem Teilnehmer der Gruppe.

Über diesen Lichtwellenleiter 112 werden sowohl die teilnehmerindividuellen Signale von der Zentrale zur Gruppe von Teilnehmern, in der sogenannten Abwärtsrichtung, als auch die teilnehmerindividuellen Signale von der Gruppe von Teilnehmern zur Zentrale, in der sogenannten Aufwärtsrichtung, übertragen, wobei zur Übertragung in Abwärtsrichtung eine erste Wellenlänge λ₀, z.B. gleich 1300 nm, und zur Übertragung in Aufwärtsrichtung eine zweite Wellenlänge λ₁, z.B. gleich 800 nm, verwendet wird. Der Lichtwellenleiter 112 und die Lichtwellenleiter L₁ bis Lₖ werden also im Wellenlängenmultiplex zur Übertragung von Signalen in beiden Richtungen verwendet. Einzelheiten werden an späterer Stelle erläutert.

Das System dient zur Übertragung von Nachrichtensignalen beliebiger Art, also von Analogsignalen oder Digitalsignalen, schmalbandig oder breitbandig, von Signalen für Verteildienste, z.B. Fernsehen, oder von Dialogdiensten, z.B. Fernsprechen oder Datenübertragung, wobei typischerweise teilnehmerindividuelle Signale in beiden Richtungen zu übertragen sind.

Das System ist vorteilhaft einsetzbar zur Abwicklung der Dialogdienste wie Fernsprechen und Datenübertragung separat von den Verteildiensten für Anwendungsfälle, in denen entweder kein Bedarf nach Verteildiensten besteht oder diese erst später unter Verwendung eines separaten Systems eingeführt werden sollen.

Die Erfindung wird am Beispiel der Übertragung von teilnehmerindividuellen Signalen in beiden Übertragungsrichtungen (Dialogdienste) erläutert. Die teilnehmerindividuellen Signale werden dabei auch Fernsprech- und Datensignale genannt, wobei hierunter folgendes zu verstehen ist: Analogsignale eines herkömmlichen Fernsprechapparates, Digitalsignale mit 64 kbit/s eines digitalen Fernsprechapparates, Digitalsignale mit 144 kbit/s eines ISDN-Endgerätes und digitale Datensignale mit 2 bis 34 Mbit/s.

Die zu der Gruppe von Teilnehmern zu übertragenden Fernsprech- und Datensignale stammen von einer Ortsvermittlungsstelle 118, von der sie in eine Anpassungsschaltung mit Modulations-/Demodulationseinrichtungen 119 eingegeben werden, die, wie an späterer Stelle erläutert wird, aus ihnen vorzugsweise ein Frequenzmultiplexsignal aufbereitet. Dieses Multiplexsignal wird in einem Elektrisch-optisch-Wandler 120 in ein optisches Signal umgesetzt, indem es dessen Ausgangslicht der Wellenlänge λ₀ intensitätsmoduliert. Das optische Signal wird mittels eines Kopplers 125 in den Lichtwellenleiter 112 eingekoppelt und über diesen in die Nähe der Teilnehmer zum Sternkoppler SK übertragen, dort auf die Lichtwellenleiter L₁ bis Lₖ verteilt und über diese bis zu den Teilnehmern übertragen. In der Zeichnung ist der mit L₃ bezeichnete Lichtwellenleiter mit dem Teilnehmer 111 verbunden.

Beim Teilnehmer wird das empfangene optische Signal mit einem Koppler 125 ausgekoppelt, in einen Optisch-elektrisch-Wandler 121 eingegeben und von diesem in ein elektrisches Signal umgesetzt.

Der Demodulator eines Modems 123 entnimmt dem die Fernsprech- und Datensignale enthaltenden Frequenzmultiplexsignal das gewünschte Signal und setzt es in die für das jeweilige Endgerät, Fernsprechapparat oder Datenendgerät oder ISDN-Teilnehmereinrichtung, geeignete und standardisierte Form um. Dabei sorgt er dafür, daß nur die für die Endgeräte des Teilnehmers 111 bestimmten Fernsprech- oder Datensignale zu diesen Endgeräten gelangen können. Im einfachsten Falle hat der Teilnehmer nur ein einziges Endgerät, z.B. einen Fernsprechapparat 127. Wenn er mehrere Endgeräte hat und daher mehrere Signale dem Frequenzmultiplexsignal entnommen werden müssen, sind entsprechend viele Modems vorhanden.

Als Teilnehmer mit mehreren Endgeräten ist sowohl ein einzelner Teilnehmer als auch eine Teilnehmergemeinschaft, deren Mitglieder ihre Wohn- oder Geschäftsräume in einem Mehrfamilienhaus haben, zu verstehen.

Falls mehrere Endgeräte vorhanden sind, ist es in jedem Falle zweckmäßig, die Einrichtungen 121 und 123 an zentraler Stelle (z.B. Keller) innerhalb des (Ein- oder Mehrfamilien-) Hauses zu installieren und die Endgeräte über die meistens schon vorhandene Hausverkabelung daran anzuschließen.

Die von einem Endgerät des Teilnehmers zur Zentrale zu sendenden Fernsprech- oder Datensignale moduliert der Modulator des Modems 123 einem Träger mit einer teilnehmerindividuellen Frequenz auf. Falls der Teilnehmer (oder die Teilnehmergemeinschaft) mehrere Endgeräte, z.B. mehrere Fernsprechapparate hat, modulieren mehrere Modems verschiedene Träger, und ein nicht gezeigter Multiplexer faßt diese Signale zu einem Frequenzband zusammen. Entweder ein einziger modulierter Träger oder ein Frequenzband aus mehreren modulierten Trägern wird dann in einem Elektrisch-optisch-Wandler 122 in ein optisches Signal umgesetzt, das in den zum Sternkoppler SK führenden teilnehmerindividuell vorhandenen Lichtwellenleiter, z.B. L₃, mittels eines Kopplers 126 eingekoppelt wird.

Die zu einer Gruppe gehörenden Teilnehmer verwenden für jedes zu einem Teilnehmer der Gruppe gehörende Endgerät eine individuelle Trägerfrequenz. Es sind z.B. 64 solcher Trägerfrequenzen vorgesehen. Statt 64 kann aber auch eine andere Zahl, allgemein m genannt, von Trägerfrequenzen vorgesehen sein. Die Gesamtheit der zu einer Gruppe von Teilnehmern zusammengefaßten Teilnehmer kann also bis zu m Endgeräte für Fernsprechen oder Datenübertragung betreiben. Die Aufteilung auf die einzelnen Teilnehmer richtet sich nach deren individuellen Kommunikationsbedürfnissen und der verfügbaren Bandbreite im System.

Die bei den verschiedenen Teilnehmern vorhandenen Elektrisch-optisch-Wandler 122 arbeiten alle etwa mit derselben Betriebswellenlänge λ1, so daß in den Sternkoppler SK z.B. 64 optische Signale mit etwa derselben Betriebswellenlänge λ1 eingestrahlt werden, die sich durch die Frequenz (Frequenzen) des den jeweiligen Elektrisch-optisch-Wandler 127 modulierenden Trägers (Trägergemisches) unterscheiden.

Dieses Prinzip der Übertragung verschiedener Signale über einen einzigen Lichtwellenleiter ist für sich bekannt aus der DE-A 32 39 593.

In der Zentrale 100 befindet sich ein Optisch-elektrisch-Wandler 129, der das empfangene Gemisch aus optischen Signalen mit derselben Wellenlänge, das der Koppler 125 aus dem Lichtwellenleiter 112 auskoppelt, in ein Gemisch aus elektrischen Signalen mit unterschiedlichen Trägerfrequenzen umsetzt und dieses auf den Eingang der Modulations-/Demodulationseinrichtung 119 gibt. Diese trennt das elektrische Signalgemisch in die einzelnen Signale auf, demoduliert diese und stellt sie an seinen Ausgängen, z.B. 64 Ausgängen, als der Norm entsprechende Fernsprech- oder Datensignale als Eingangssignale für die Ortsvermittlungsstelle 118 zur Verfügung. An den Eingängen dieser Ortsvermittlungsstelle 118 liegen die Fernsprech- oder Datensignale in derselben Form und Qualität vor, die für die Übertragung von Fernsprech- oder ISDN-Signalen oder Datensignalen vorgeschrieben ist.

Die Koppler 125 und 126 sind wellenlängenselektiv und trennen die beiden Wellenlängen λ₀ und λ₁ ohne große optische Verluste und mit sehr geringem Nebensprechen.

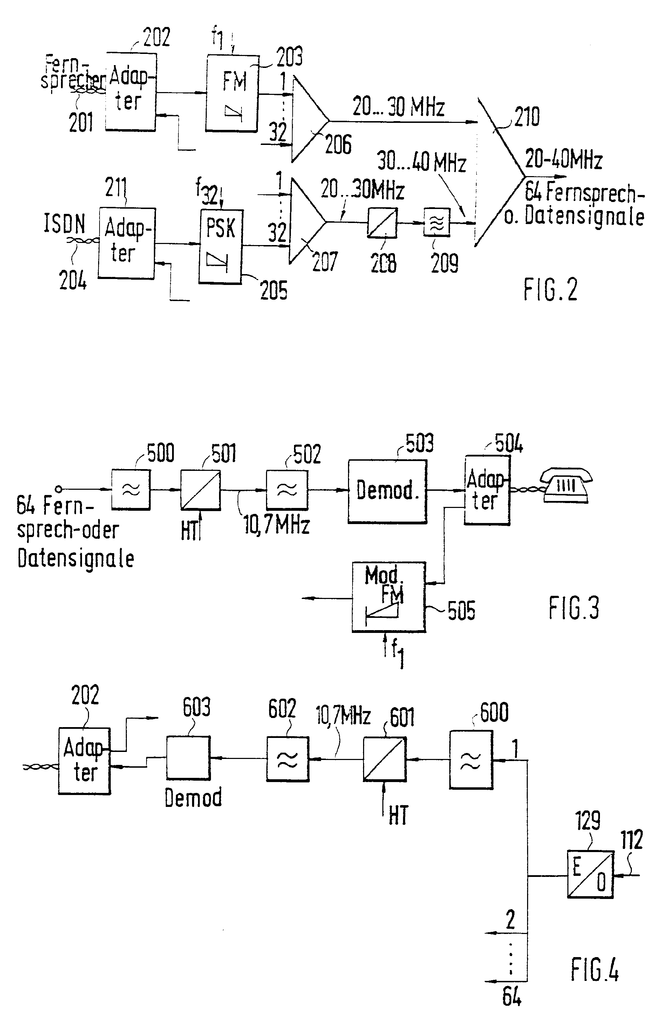

Anhand der Fig. 2 wird nun beschrieben, welche Art der Modulation und Multiplexbildung die Modulations- und Multiplexeinrichtung der Einrichtung 119 durchführt.

In Fig. 2 ist der Modulator/Multiplex-Teil der in Fig. 1 gezeigten Einrichtung 119 für Fernsprech- und Datensignale, die sich in der Zentrale befindet, dargestellt.

Die von der Ortsvermittlungsstelle (118 in Fig. 1) über eine normale Zweidraht-Leitung 201 eingehenden Fernsprechsignale werden in einem sogenannten Adapter 202 in eine Form umgesetzt, die zu einer Übertragung durch ein Vierdrahtsystem mit Frequenzmodulation geeignet ist. Der Adapter 202 hat im wesentlichen die Funktion eines Umsetzers, z.B. für Zweidraht-Vierdraht-Umsetzung, für Wählzeichen, Wecksignale usw. Das durch diese Umsetzung entstandene Signal gelangt auf den Modulationseingang eines Modulators 203 und wird dort einem Träger mit der Frequenz f₁ mittels Frequenzmodulation aufmoduliert. Diese Trägerfrequenz f₁ ist individuell einem Fernsprech-Teilnehmeranschluß eines der Teilnehmer der anhand von Fig. 1 erläuterten Gruppe von Teilnehmern zugeordnet.

Die Teilnehmer dieser Gruppe können, wie oben angedeutet, statt Fernsprechanschlüsse auch andere Anschlüsse, z.B. Anschlüsse an ein digitales Netz, z.B. an ISDN (Integrated Service Digital Network), haben. In diesem Falle gelangen die digitalen ISDN-Signale, wie dies für eine weitere Zweidraht-Leitung 204 gezeigt ist, auf einen Adapter 211 für ISDN-Signale, und dessen Ausgangs-Digitalsignal zum Modulationseingang eines für Digitalsignale geeigneten Modulators 205, in dem es z.B. durch Phasenumtastung (engl.: phase shift keying, PSK) oder Frequenzumtastung (eng.: frequency shift keying, FSK) einem Träger mit einer diesem ISDN-Teilnehmer individuell zugeordneten Frequenz f₃₂ aufmoduliert wird.

Bei dem eben gezeigten Beispiel entstehen auf diese Weise eine erste Gruppe von 32 Trägern mit verschiedenen Frequenzen aus dem Frequenzband von 20 bis 30 MHz, die entweder mit analogen Fernsprechsignalen frequenzmoduliert oder mit Digitalsignalen, z.B. ISDN-Signalen, durch Phasen- oder Frequenzumtastung moduliert sind. Im Beispiel ist von der einen Gruppe die Modulation eines Trägers mit der Frequenz f₁ durch Frequenzmodulation mit Fernsprechsignalen und bei der zweiten Gruppe die Modulation eines Trägers mit der Frequenz f₃₂ durch Phasenumtastmodulation mit ISDN-Signalen gezeigt. Beliebige Mischungen sind möglich.

Im gezeigten Beispiel faßt ein erster Leistungsaddierer 206 32 modulierte Träger mit den verschiedenen Trägerfrequenzen f₁ bis f₃₂ zu einem Frequenzband mit einer Bandbreite von 20 bis 30 MHz zusammen, und ein zweiter Leistungsaddierer 207 faßt ebenso eine Gruppe von 32 modulierten Trägern mit den Frequenzen f₁ bis f₃₂ zu einem Frequenzband mit der gleichen Bandbreite 20 bis 30 MHz zusammen. Eines dieser beiden Frequenzbänder wird mittels eines Umsetzers 208 und eines nachgeschalteten Filters 209 in das Frequenzband 30 bis 40 MHz umgesetzt, und diese beiden Frequenzbänder werden in einem Leistungsaddierer 210 zu einem Frequenzband von 20 bis 40 MHz zusammengefaßt, das bis zu 64 Fernsprech- und Datensignale enthalten kann. Dieses Frequenzband ist das Ausgangssignal der in Fig. 1 gezeigten Einrichtung 119.

Eine Übertragung einer Vielzahl von Signalen durch Frequenzmodulation verschiedener Träger und durch Intensitätsmodulation eines einzigen optischen Senders durch das Signalgemisch ist bekannt aus "Electronics Letters", 22nd October 1987, VOL. 23, No. 22, S. 1196 bis 1197. Die Signale sind dort Fernsehsignale, und eine Übertragung von Fernsprech- oder ISDN-Signalen (Dialogdienste) ist nicht erwähnt.

Anhand von Fig. 3 wird nun die beim Teilnehmer stattfindende Verarbeitung der Fernsprech- und Datensignale erläutert. Das diese Signale enthaltende Frequenzband von 20 bis 40 MHz wird in einem Vorfilter 500, das auf die dem betrachteten Teilnehmeranschluß individuell zugeordnete Frequenz abgestimmt ist, vorgefiltert und dadurch der gewünschte Träger aus dem Gemisch von modulierten Trägern herausgetrennt, was jedoch nur unvollständig geschieht, d.h. die anderen Träger sind im Ausgangssignal noch enthalten, wenn auch mit geringerer Amplitude. In einem Zwischenfrequenz-Umsetzer 501 wird dieses Signal mit einem Hilfsträger HT gemischt, dessen Frequenz so gewählt ist, daß der gewünschte Träger auf eine für alle Träger einheitliche Zwischenfrequenz von vorzugsweise 10,7 MHz umgesetzt wird. Ein nachgeschaltetes Zwischenfrequenz-Filter 502, das auf diese Zwischenfrequenz abgestimmt ist, isoliert praktisch die auf diese Frequenz umgesetzte Nutzinformation von den anderen störenden Trägern. Nach der Demodulation in einem Demodulator 503 liegt schließlich das Fernsprech- oder Datensignal im usprünglichen Basisband vor.

Als Demodulator 503 wird, wenn es sich um einen Fernsprechanschluß handelt, ein FM-Demodulator, und wenn es sich um einen ISDN-Anschluß handelt, ein PSK- oder FSK-Demodulator verwendet.

Die Umsetzung auf die Zwischenfrequenz 10,7 MHz, anschließende Filterung und FM-Demodulation entspricht der Signalverarbeitung in heutzutage üblichen UKW-Rundfunkempfängern und hat daher den Vorteil, daß kostengünstige und erprobte Schaltungen eingesetzt werden können. Ein weiterer Vorteil liegt darin, daß für alle Teilnehmeranschlüsse einheitliche Demodulatoren, einheitliche Zwischenfrequenzfilter und, abgesehen von der Frequenz des Hilfsträgers, einheitliche Zwischenfrequenz-Umsetzer verwendbar sind.

Das am Ausgang des Demodulators 503 erscheinende Fernsprech- oder ISDN-Signal wird schließlich in einem Adapter 504, dessen Funktion bereits im Zusammenhang mit Fig. 2 erläutert wurde, so umgesetzt, daß das für die Teilnehmereinrichtung (Fernsprechapparat oder ISDN-Einrichtung) normgerechte Signal wieder hergestellt wird.

Die von dieser Teilnehmereinrichtung zur Zentrale zu sendenden Signale setzt der Adapter 504 und ein diesem nachgeschalteter Modulator 505, der für ein analoges Fernsprechsignal ein FM-Modulator und für ein Datensignal ein Phasenumtast- oder Frequenzumtast-Modulator ist, so um, daß ein modulierter Träger mit einer der Teilnehmereinrichtung innerhalb einer Gruppe von Teilnehmern individuell zugeordneten Frequenz f₁ entsteht. Dieser modulierte Träger wird dann im einfachsten Falle direkt auf den in Fig. 1 gezeigten Elektrisch-optisch-Wandler 122 des Teilnehmers gegeben oder, falls der Teilnehmer mehrere Endgeräte hat, über einen nicht gezeigten Multiplexer, so daß im letzteren Falle der im Wandler 122 bekanntlich vorhandene Laser durch ein Signalgemisch aus mehreren modulierten Trägern in seiner Lichtintensität moduliert wird.

Die in Fig. 2 und Fig. 3 gezeigten Modulatoren und Demodulatoren können umschaltbar sein, damit sie entweder Fernsprechsignale durch Frequenzmodulation oder Datensignale durch Frequenz- oder Phasenumtastmodulation verarbeiten können.

In Fig. 4 ist der Demodulator-Teil der Einrichtung 119 aus Fig. 1 gezeigt. Das über den in Fig. 1 gezeigten Lichtwellenleiter 112 empfangene optische Signal, das in dem Optisch-Elektrisch-Wandler 129 in ein elektrisches Signal umgesetzt wird, wird in dem zu beschreibenden Demodulator auf m (z.B. m = 64) Leitungen verteilt, da es bis zu m Fernsprech- oder Datensignale enthält.

Dieses Signalgemisch gelangt auf verschiedene Demodulationswege, von denen ein einziger gezeigt ist. Dort erfolgt mit Hilfe eines Vorfilters 600, eines Zwischenfrequenz-Umsetzers 601, eines Zwischenfrequenz-Filters 602 und eines Demodulators 603 eine Demodulation, wie sie anhand der entsprechend bezeichneten Baugruppen im Zusammenhang mit Fig. 3 bereits erläutert ist. Das am Ausgang des Demodulators 603 erscheinende Fernsprech- oder Datensignal wird schließlich in einem Adapter 202, dessen Funktion bereits im Zusammenhang mit Fig. 2 erläutert wurde, so umgesetzt, daß es auf die zur Ortsvermittlungsstelle führende Zweidraht-Leitung gegeben werden kann.

Im vorstehend erläuterten Ausführungsbeispiel der Erfindung ist als optisches Mittel zum Verteilen des in Abwärtsrichtung übertragenen optischen Signals und zum Einkoppeln der in Aufwärtsrichtung von den Teilnehmern zur Zentrale zu sendenden Signale in den Lichtwellenleiter 112 ein optischer Sternkoppler gezeigt.

Selbstverständlich können als solche optischen Mittel auch verteilt angeordnete optische Koppler vorhanden sein, wie es aus der eingangs genannten DE-A1-35 07 064, Fig. 1, für sich bekannt ist.

Auch müssen die optischen Mittel nicht passiv sein, sondern es können an geeigneten Stellen z.B. optische Verstärker oder elektrische Verstärker mit zugehörigen Optisch-elektrisch- und Elektrisch-optisch-Wandlern eingefügt sein.

Im folgenden werden noch einige Modifikationen und Ergänzungen des in Fig. 1 gezeigten Systems erläutert.

Eine Ergänzung bezieht sich auf die Wahl der Frequenzen für die Übertragung der Fernsprech- oder Datensignale, und zwar sowohl in der Abwärts-, als auch in der Aufwärtsrichtung. Als Fernsprech- oder Datensignale kommen die oben erläuterten verschiedenen Signale in Frage. Wie oben erwähnt, sollen die Träger zur Übertragung dieser Signale z.B. in dem Frequenzband von 20 MHz bis 40 MHz liegen. Die zur Übertragung der analogen Fernsprechsignale und der Digitalsignale mit Bitfolgefrequenzen von 64 bis 144 kbit/s verwendeten Trägerfrequenzen haben zweckmäßigerweise ein einheitliches Kanalraster, d.h. einen Nachbarabstand der Trägerfrequenzen, von 300 kHz. Hierdurch können zur Übertragung der Analogsignale durch die Frequenzmodulation erprobte Schaltungen aus der UKW-Rundfunktechnik verwendet werden. Die Trägerfrequenzen zur Übertragung der digitalen Daten mit 2Mbit/s werden zweckmäßigerweise in den oberen Bereich des Frequenzbandes von 20 MHz bis 40 MHz gelegt, z.B. eine Trägerfrequenz zur Übertragung solcher Daten bei 38 MHz, wobei die Modulation zur Übertragung des 2 Mbit/s-Digitalsignals eine Bandbreite von ca. 1 bis 2 MHz und damit einen Abstand zu benachbarten Trägerfrequenzen von 1 bis 2 MHz erfordert.

Eine weitere Ergänzung betrifft die im System verwendeten Elektrisch-optisch-Wandler. Sind die Kennlinien dieser Wandler nicht hinreichend linear, so bilden sich Mischprodukte mit Frequenzen, die in das Übertragungsband fallen und dort sehr störend wirken können. Diese Störungen sind umso gravierender, je breiter das Frequenzspektrum des Eingangssignals ist. Um die Linearität der Elektrisch-optisch-Wandler zu verbessern, wird jeder dieser Wandler mit einer Schaltung zur Linearisierung ausgestattet, wobei die Linearisierung durch eine negative Rückkopplung des ausgesendeten optischen Signals etwa derart, wie sie z.B. aus der US-PS 3 996 526 bekannt ist, erfolgt.

Eine weitere Modifikation betrifft die Übertragung des eine Vielzahl von modulierten Trägern enthaltenden Frequenzbandes als optisches Signal. Im oben erläuterten Ausführungsbeispiel der Einrichtung 119 (Fig. 1) ist vorgesehen, daß ein einziger Elektrisch-optisch-Wandler 120 als Eingangssignal ein Frequenzmultiplex-Signal erhält, das eine Vielzahl von modulierten Trägern enthält.

Problematisch bei dieser Art der Übertragung ist das Rauschen des Systems, d.h. bei vielen gleichzeitig über einen optischen Sender zu übertragenden Trägern kann der Geräuschabstand in jedem der einzelnen Kanäle ungenügend werden. Das liegt u.a. daran, daß das Signalgemisch aus den vielen Trägern nur einen sehr kleinen Modulationsgrad pro Träger des im Elektrisch-optisch-Wandler verwendeten Lasers gestattet, damit der Laser nicht übersteuert wird. Erhöht man den Modulationsgrad beim Laser, so kommt das Eingangssignal auf zu hohe Spitzenwerte, die den Laser übersteuern. Interferenzen zwischen den Nutzsignalen bilden dann Störprodukte, die die Qualität der Nutzsignale stark herabsetzen können.

Gemäß einer vorteilhaften Ausgestaltung der Erfindung ist daher vorgesehen, das insgesamt zu übertragende Frequenzband in mehrere Teilbänder, von denen jedes nur einen Teil der insgesamt zu übertragenden modulierten Träger enthält, aufzuteilen, jedes Teilband in einem eigenen Elektrisch-optisch-Wandler in ein optisches Signal umzusetzen, wobei für alle optischen Signale eine einheitliche Wellenlänge verwendet wird, und diese optischen Signale in den zwischen der Zentrale und der Gruppe von Teilnehmern verlaufenden Lichtwellenleiter 112 (Fig. 1) einzukoppeln.

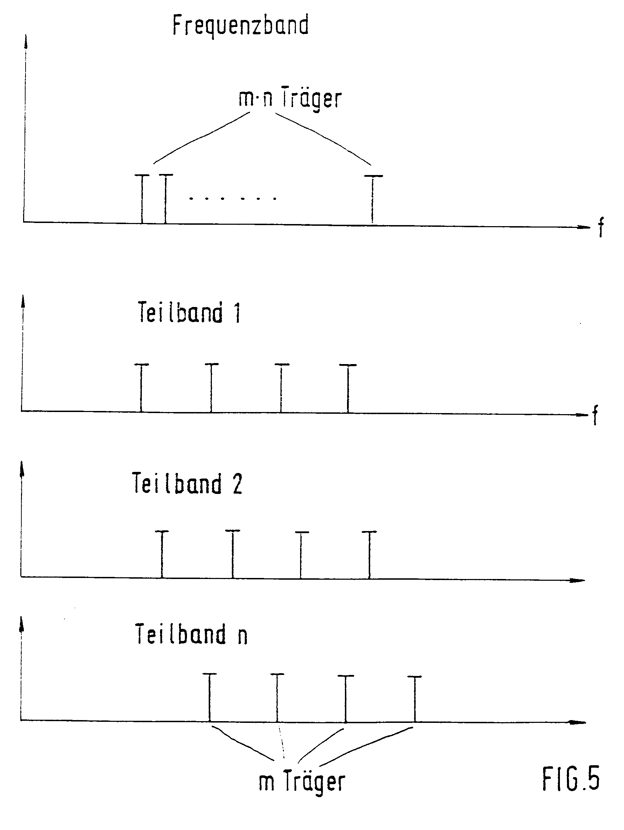

In Fig. 5 ist gezeigt, wie das zu übertragende Frequenzband in die Teilbänder aufgeteilt wird. Ein Frequenzband mit einer Vielzahl von Trägern wird in n Teilbänder so unterteilt, daß jeweils eine Gruppe von m Trägern in einem der Teilbänder enthalten ist und dadurch insgesamt die Vielzahl m X n Träger des ursprünglich vorliegenden Frequenzbandes wie in Fig. 5 gezeigt auf die verschiedenen Teilbänder aufgeteilt ist. Die Teilbänder können also jeweils das ganze Spektrum des ursprünglichen Übertragungsbandes haben. Sie enthalten jedoch eine deutlich geringere Anzahl von Trägern als das ursprüngliche Frequenzband.

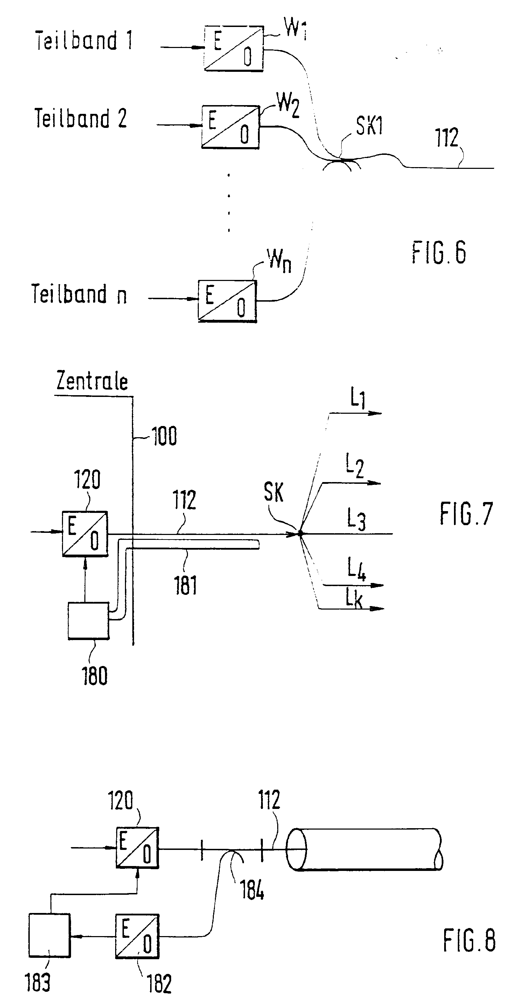

In Fig. 6 ist gezeigt, daß jedes der n Teilbänder auf einen eigenen Elektrisch-optisch-Wandler W₁ bis Wₙ gegeben wird und daß deren Ausgangssignale mittels eines Sternkopplers SK1 zu einem optischen Summensignal zusammengefaßt und in den zur Gruppe von Teilnehmern führenden Lichtwellenleiter 112 (Fig. 1) eingekoppelt werden. Hierbei kann nun jeder Elektrisch-optisch-Wandler, genauer gesagt der in ihm enthaltene Laser, optimal im Hinblick auf Intermodulationsverzerrungen einerseits und Rauschen andererseits ausgesteuert werden. Dabei liegt wegen der geringeren Anzahl der Träger der Modulationsgrad je Träger im Laser deutlich höher, so daß für jedes Trägersignal der Geräuschabstand deutlich besser ist.

Die Wellenlänge der Wandler W₁ bis Wₙ wird vorzugsweise als eine einheitliche Wellenlänge, z.B. ca. 1300 nm gewählt. Empfangsseitig wird das übertragene optische Summensignal wie in Fig. 1 gezeigt mit einem einzigen optischen Empfänger 121 in ein elektrisches Signal umgesetzt, das alle ursprünglichen Träger enthält, jedoch mit einer weit besseren Signalqualität als bei der Übertragung mit nur einem optischen Sender.

Zu diesem Übertragungsverfahren ist zu bemerken, daß die Aufteilung eines breitbandigen Frequenzmultiplex-Signals in Teilbänder und die getrennte Umsetzung der Teilbänder in optische Signale bekannt ist aus der DE-A1 32 03 785. Dort werden allerdings optische Signale mit verschiedenen Wellenlängen erzeugt und über einen einzigen Lichtwellenleiter übertragen. Andererseits ist es aus der DE-A1 32 39 593 bekannt, mehrere nicht überlappende Frequenzbänder mit jeweils einem Elektrisch-optisch Wandler in optische Signale mit einer einheitlichen Wellenlänge umzusetzen, diese mit einem Sternkoppler zusammenzufassen und über einen einzigen Lichtwellenleiter zu übertragen.

Die vorstehend beschriebene parallele Verwendung mehrerer Laser hat als weiteren Vorteil einen höheren Lichtpegel am Ausgang des Sternkopplers SK zur Folge, was die Überbrückung einer größeren optischen Streckendämpfung oder die Verteilung der optischen Signale mittels optischer Sternkoppler auf mehrere Teilnehmer erleichtert.

Nachstehend wird eine Ergänzung beschrieben, die die Sicherheit der Systembenutzer im Falle eines Bruchs der Lichtwellenleiter betrifft. Da in dem System vorzugsweise Laser als optische Sendeelemente verwendet werden, besteht die Notwendigkeit, bei bestimmten Störungen, z.B. wenn ein Bagger ein Lichtwellenleiterkabel zerreißt, die Laser an den Enden der Übertragungsstrecke abzuschalten, um das Risiko von Augen-Unfällen und den damit verbundenen Folgeschäden zu vermeiden.

Bei dem optischen Übertragungssystem gemäß der vorliegenden Erfindung kann es erforderlich sein, mit einer hohen optischen Sendeleistung (mehr als -6 dBm) zu arbeiten, um bestimmte systemtechnische Eigenschaften zu erreichen wie z.B. die Überbrückung einer Mindestdistanz zwischen der Zentrale und den Teilnehmern oder die Einhaltung eines bestimmten Geräuschabstandes. Ein Rückkanal, um ein Alarmsignal von der Teilnehmerseite zur sendenden Zentrale zu geben, um dort den Laser abzuschalten, ist nicht ausreichend, da das Rücksenden eines Alarmsignals nicht möglich ist, wenn das Kabel defekt ist, da jeder Teilnehmer nur über ein einziges Kabel oder einen einzigen Lichtwellenleiter mit der Zentrale verbunden ist.

Erfindungsgemäß kann daher eine der nachfolgend zu beschreibenden Schutzeinrichtungen vorhanden sein.

In Fig. 7 ist eine Schutzeinrichtung gezeigt, die eine optische oder elektrische Schleife zur Überwachung einer Lichtwellenleiter-Strecke vorsieht. Soll ein Faserbruch auf einer Lichtwellenleiter-Strecke zwischen zwei Punkten A und B, beispielsweise, wie in Fig. 7 gezeigt, zwischen der Zentrale 100 und dem Koppler SK überwacht werden, so geschieht dies mit einer optischen oder elektrischen Schleife 181, die in unmittelbarer Nähe zur zu überwachenden Lichtwellenleiter-Strecke verläuft. Von einem Überwachungsgerät 180 verläuft z.B. ein Kupferdraht entlang dem Lichtwellenleiter 112 bis zum Koppler 113 und von dort wieder zurück zum Überwachungsgerät. Über diese Schleife sendet das Überwachungsgerät einen Strom, der im ungestörten Betriebszustand ständig fließt. Wenn das Kabel zerrissen wird, wird auch die Schleife unterbrochen, so daß das Überwachungsgerät die Abschaltung des im Elektrisch-optisch-Wandler 120 vorhandenen Laser veranlaßt.

Es ist auch möglich, die Fernspeiseleitung in diesem Sinne zur Kabelbruch-Überwachung mitzuverwenden. Die Kupferdrähte können entweder in den Beipack des optischen Kabels eingelassen sein, oder es kann ein dünnes Kupferkabel parallel zur Lichtwellenleiterkabel verlegt werden.

Statt der Kupferdrähte können auch Lichtwellenleiter verwendet werden, die Bestandteil des den Übertragungs-Lichtwellenleiter enthaltenden optischen Kabels sind. In diesem Falle werden sie in der Nähe des Kopplers zusammengespleißt, und ein Faserbruch wird daran festgestellt, daß der Lichtweg über diese optische Schleife von der Zentrale zum Koppler und zurück unterbrochen wird.

Im Falle einer elektrischen Schleife in Form von Kupferdrähten und, falls auf der Übertragungsstrecke optische Stecker vorhanden sind, können diese so konstruiert werden, daß beim Zusammenstecken der Steckerhälften die elektrische Schleife geschlossen wird.

In Fig. 8 ist eine Schutzeinrichtung gezeigt, bei der zwischen dem Elektrisch-optisch-Wandler 120 für das zu sendende Signal und das Faserkabel ein optischer Koppler 184 eingespleißt ist und das zu sendende optische Signal über diesen Koppler in den Übertragungs-Lichtwellenleiter 112 eingekoppelt wird. Die aus diesem reflektierten und rückgestreuten optischen Signale werden an einem Ende des Kopplers 184 mit einem Optisch-elektrisch-Wandler 182 detektiert. Ein das elektrische Ausgangssignal des Wandlers 182 auswertender Überwachungs-Schaltkreis 183 veranlaßt die Abschaltung des im Elektrisch-optisch-Wandler 120 enthaltenen Lasers, wenn das detektierte Licht einen vorgegebenen Schwellenwert überschreitet. Dem liegt zugrunde, daß ein zu hoher Pegel des reflektierten Lichts auf einen Bruch des Lichtwellenleiters hindeutet.

Gemäß einer Weiterbildung der Schutzeinrichtung nach Fig. 8 ist es möglich, auch am noch freien Ende des Kopplers 184 einen Optisch-elektrisch-Wandler vorzusehen. Dieser detektiert dann einen Teil des vom Elektrisch-optisch-Wandler ausgesendeten Lichts und liefert ein elektrisches Ausgangssignal, das einerseits zur elektrischen Gegenkopplung des Lasers verwendbar ist, um damit die Laserkennlinie zu linearisieren und dessen niederfrequenter Anteil zur Arbeitspunkteinstellung des Lasers verwendbar ist.

Es ist darauf hinzuweisen, daß die vorstehend beschriebenen Schutzeinrichtungen nicht nur im Zusammenhang mit dem erfindungsgemäßen System verwendbar sondern als eigenständige Lösungen betrachtet werden können, wenn immer es darum geht, eine zwischen zwei Punkten A und B bestehende optische Übertragungsstrecke hinsichtlich einer Streckenunterbrechung zu überwachen.

Schließlich wird noch eine Modifikation beschrieben, die die Übertragung der Fernsprech- und Datensignale in den beiden Richtungen zwischen der Zentrale und den Teilnehmern betrifft. Im vorstehenden ist beschrieben, daß die Übertragung dieser Signale im Frequenzmultiplex mit teilnehmerindividuellen Trägerfrequenzen stattfindet.

Stattdessen können die Signale auch im Zeitmultiplex oder auch im Codemultiplex übertragen werden.

Wird zur Übertragung von der Zentrale zu den Teilnehmern das Zeitmultiplex-Verfahren angewendet, so werden in der Zentrale die zu einer Gruppe von Teilnehmern zu übertragenden Signale zu einem digitalen Zeitmultiplex-Signal mit einer Bitfolgefrequenz von z.B. etwa 8 Mbit/s zusammengefaßt, und dieses wird übertragen, wobei es gegebenenfalls auch einem Träger aufmoduliert wird und/oder durch Codierung mit einem Leitungscode auf ein geeignetes Frequenzband beschränkt wird. Analoge Fernsprechsignale werden vor der Zeitmultiplex-Zusammenfassung in digitale Signale umgesetzt. Jeder Teilnehmer hat Demultiplexeinrichtungen, die die für ihn bestimmten Signale entnehmen.

Falls zur Übertragung der Fernsprech- und Datensignale von der Zentrale zu den Teilnehmern das Codemultiplex-Verfahren angewendet wird, werden die digitalen (oder digitalisierten) Signale für eine Gruppe jeweils mit einem Adresscode multipliziert und in einem Leistungsaddierer zu einem Codemultiplex-Signalgemisch zusammengefaßt, und dieses wird übertragen. Jeder Teilnehmer hat Demultiplexeinrichtungen, die das für ihn bestimmte Signal entnehmen.

Zur Übertragung der Fernsprech- und Datensignale in der entgegengesetzten Richtung kann ebenfalls das Zeitmultiplex-Verfahren oder das Codemultiplex-Verfahren angewendet werden. Die bei den Teilnehmern vorhandenen Multiplexer sorgen dann dafür, daß die von einer Gruppe von Teilnehmern zur Zentrale zu sendenden Fernsprech- oder Datensignale in teilnehmerindividuell zugeordneten Zeitabschnitten eines (Zeitmultiplex-)Pulsrahmens oder mit teilnehmerindividuell zugeordneten Adresscodes multipliziert in ein optisches Signal mit der Wellenlänge λ₁ umgesetzt werden. Zur Zentrale wird dann ein Gemisch von optischen Signalen übertragen, die sich nicht durch ihre Wellenlängen, sondern durch die Zeitabschnitte, in denen sie ihr Fernsprech- oder Datensignal enthalten, oder durch die Codes des den jeweiligen Elektrisch-optisch-Wandlers 122 (Fig. 1) modulierenden Digitalsignals (oder der Digitalsignale) unterscheiden. Die Zentrale enthält die geeigneten Demultiplexeinrichtungen, um das elektrische Ausgangssignal des Optisch-elektrisch-Wandlers 129 (Fig. 1) in seine Einzel-Signale aufzulösen.

Vorzugsweise wird die Kombination angewendet, daß die Übertragung in Abwärtsrichtung im Zeitmultiplex-Verfahren und die Übertragung Aufwärtsrichtung im Codemultiplex-Verfahren erfolgt.

## Patentansprüche

1. Optisches Nachrichtenübertragungssystem zur doppeltgerichteten Übertragung von Nachrichtensignalen zwischen einer Zentrale (100) und Teilnehmern (111),
- bei dem die Teilnehmer zu Gruppen zusammengefaßt sind,
- mit Mitteln, um die von der Zentrale (100) zu einer Gruppe von Teilnehmern (111) zu übertragenden Signale in der Zentrale (100) zu einem elektrischen Multiplexsignal zusammenzufassen und als optisches Signal mit einer ersten Wellenlänge (λ0) über einen der Gruppe von Teilnehmern gemeinsamen Lichtwellenleiter (112) in die Nähe dieser Teilnehmer zu übertragen,
- mit optischen Mitteln (SK) und teilnehmerindividuellen Lichtwellenleitern (L₁ bis L_{K}), um das übertragene optische Signal zu den Teilnehmern zu verteilen,
- mit bei jedem Teilnehmer (111) vorhandenen Einrichtungen (121, 123), die das empfangene optische Signal in ein elektrisches umsetzen und das für ihn bestimmte Signal aus den teilnehmerindividuellen Signalen entnehmen,
- bei dem die Lichtwellenleiter (112, L₁ bis L_{K}) im Wellenlängenmultiplex auch zur Übertragung von Nachrichtensignalen von den Teilnehmern (111) zur Zentrale (100) verwendet sind,
**dadurch gekennzeichnet**,
- daß in der Zentrale (100) Mittel (203, 205, 206, 207, 208, 209, 210) vorhanden sind, um die von der Zentrale (100) zu einer Gruppe von Teilnehmern (111) zu übertragenden Signale zu einem Frequenzmultiplexsignal mit teilnehmerindividuellen Trägerfrequenzen für teilnehmerindividuelle Signale zusammenzufassen,
- daß bei den Teilnehmern (111) der Gruppe Mittel (123) vorhanden sind, um die zur Zentrale (100) zu übertragenden Signale Trägern mit teilnehmerindividuellen Trägerfrequenzen aufzumodulieren,
- daß Mittel (122, 126, SK) vorhanden sind, um die modulierten Träger in optische Signale mit einer für alle Teilnehmer einer Gruppe einheitlichen zweiten Wellenlänge (λ1) umzusetzen und diese über die teilnehmerindividuellen Lichtwellenleiter (L₁ bis L_{K}) zu dem gemeinsamen Lichtwellenleiter (112) und über diesen zur Zentrale zu übertragen,
- daß in der Zentrale (100) Einrichtungen (129, 119) vorhanden sind, die das empfangene Gemisch von optischen Signalen in ein Gemisch von elektrischen Signalen umsetzen und dieses demodulieren.

2. System nach Anspruch 1 mit den folgenden weiteren Merkmalen:
a) Zur Aufbereitung des von der Zentrale (100) zu einer Gruppe von Teilnehmern zu übertragenden Frequenzmultiplexsignals enthält die Zentrale (100):
- Modulationseinrichtungen (203, 205), die die zu den Teilnehmern zu übertragenden teilnehmerindividuellen Nachrichtensignale unterschiedlichen Trägern mit teilnehmerindividuellen Trägerfrequenzen aufmodulieren, und
- Multiplexeinrichtungen (206, 207, 208, 210), die die modulierten Träger zu dem Frequenzmultiplexsignal zusammenfassen (Fig. 2);
b) die Zentrale enthält einen Elektrisch-optisch-Wandler (120), der das Frequenzmultiplexsignal durch Intensitätsmodulation des erzeugten Lichts in ein optisches Signal umsetzt;
c) beim Teilnehmer (111) sind Demodulatoren (500, 501, 502, 503) vorhanden, die aus dem Frequenzmultiplexsignal die für den Teilnehmer bestimmten teilnehmerindividuellen Nachrichtensignale wiedergewinnen, und Umsetzeinrichtungen (504), welche die wiedergewonnenen Nachrichtensignale in die ursprüngliche Form umsetzen (Fig. 3).

3. System nach einem der vorstehenden Ansprüche, dadurch gekennzeichnet, daß die verwendeten Elektrisch-optisch-Wandler (120, 122) Schaltungen zur Linearisierung ihrer Kennlinie enthalten.

4. System nach einem der vorstehenden Ansprüche, dadurch gekennzeichnet, daß das Frequenzmultiplexsignal in mehrere Teilbänder aufgeteilt wird, daß für jedes der Teilbänder ein Elektrisch-optisch-Wandler (W₁ bis Wₙ) vorhanden ist, der es in ein optisches Signal umwandelt, und daß die dabei entstehenden optischen Signale in den Lichtwellenleiter (112) eingekoppelt und über diesen übertragen werden (Fig. 6).

5. System nach einem der vorstehenden Ansprüche, dadurch gekennzeichnet, daß parallel zu einem Lichtwellenleiter (112), über den ein optisches Signal mit hohem Leistungspegel übertragen wird, eine optische oder elektrische Schleife (181) verläuft und daß bei einem in den Lichtwellenleiter sendenden Elektrisch-optisch-Wandler (120) eine Überwachungseinrichtung (180) vorhanden ist, die Licht bzw. einen elektrischen Strom über die Schleife sendet und bei Unterbrechung des Lichtwegs oder Stromwegs den Optisch-elektrisch-Wandler (120) abschaltet (Fig. 7).

6. System nach einem der Ansprüche 1 bis 4, dadurch gekennzeichnet, daß zwischen einem in einen Lichtwellenleiter (112) lichtsendenden Elektrisch-optisch-Wandler (120) und den Lichtwellenleiter (112) ein Koppler (184) eingefügt ist, der im Lichtwellenleiter (112) reflektiertes Licht auskoppelt, daß ein Detektor (182) und eine Überwachungseinrichtung (183) vorhanden sind, die die Abschaltung des Elektrisch-optisch-Wandlers (120) veranlassen, wenn der Pegel des ausgekoppelten reflektierten Lichts einen vorgegebenen Schwellenwert überschreitet (Fig. 8).

7. System nach Anspruch 6, dadurch gekennzeichnet, daß der Koppler (184) auch einen Teil des vom Elektrisch-optisch-Wandler (120) gesendeten Lichts auskoppelt, daß ein Detektor vorhanden ist, der das ausgekoppelte Licht in ein elektrisches Signal umsetzt und daß Schaltungen vorhanden sind, die das elektrische Signal für eine elektrische Gegenkopplung des Elektrisch-optisch-Wandlers verwenden und die aufgrund des niederfrequenten Anteils des elektrischen Signals den Arbeitspunkt des Elektrisch-optisch-Wandlers einstellen.

8. System nach einem der vorstehenden Ansprüche, dadurch gekennzeichnet, daß das in der Zentrale (100) gebildete Multiplexsignal statt eines Frequenzmultiplex-Signals mit teilnehmerindividuellen Trägerfrequenzen für die teilnehmerindividuellen Signale ein Zeitmultiplex-Signal mit teilnehmerindividuellen Pulsrahmen-Zeitabschnitten für die teilnehmerindividuellen Signale ist.

9. System nach einem der Ansprüche 1 bis 8, dadurch gekennzeichnet, daß das in der Zentrale (100) gebildete Multiplexsignal statt eines Frequenzmultiplex-Signals mit teilnehmerindividuellen Trägerfrequenzen für die teilnehmerindividuellen Signale ein Codemultiplex-Signal mit teilnehmerindividuellen Codes für die teilnehmerindividuellen Signale ist.

10. System nach einem der vorstehenden Ansprüche, dadurch gekennzeichnet, daß die von der Teilnehmer-Gruppe zur Zentrale zu übertragenden Signale statt Träger mit teilnehmerindividuellen Trägerfrequenzen zu modulieren, in Digitalsignale mit teilnehmerindividuellen Codes umgesetzt werden, die statt der modulierten Träger und diesen entsprechend in optische Signale umgesetzt und zur Zentrale übertragen werden.

11. System nach einem der Ansprüche 1 bis 9, dadurch gekennzeichnet, daß die von der Teilnehmer-Gruppe zur Zentrale zu übertragenden Signale, statt Träger mit teilnehmerindividuellen Trägerfrequenzen zu modulieren, in Digitalsignale mit bezogen auf einen Pulsrahmen teilnehmerindividuell zugeordneten aktiven Zeitabschnitten umgesetzt werden, die statt der modulierten Träger diesen entsprechend in optische Signale umgesetzt und zur Zentrale übertragen werden.

## Claims

1. An optical information transmission system for the bidirectional transmission of information signals between a control centre (100) and subscribers (111)
- wherein the subscribers are combined to form groups,
- with means to combine, in the control centre (100), the signals to be transmitted from the control centre (100) to a group of subscribers (111) to form an electrical multiplex signal and to transmit the latter as optical signal with a first wavelength (λ0) via an optical waveguide (112), which is common to the group of subscribers, into the vicinity of these subscribers,
- with optical means (SK) and with subscriber-individual optical waveguides (L₁ to L_{K}) for the distribution of the transmitted optical signal between the subscribers
- with devices (121, 123), provided in each subscriber station (111), which convert the received optical signal into an electrical signal and from the subscriber-individual signals extract the signal intended for the subscriber,
- wherein the optical waveguides (112, L₁ to L_{K}) are also used in accordance with wave length division multiplex for the transmission of information signals from the subscribers (111) to the control centre (100).

2. A system as claimed in Claim 1 with the following further features:
a) for the preparation of the frequency division multiplex signal to be transmitted from the control centre (100) to a group of subscribers the control centre (100) comprises:
- modulation devices (203, 205) which modulate the subscriber-individual information signals to be transmitted to the subscribers onto different carriers with subscriber-individual carrier frequencies and
- multiplex devices (206, 207, 208, 210) which combine the modulated carriers to form the frequency division multiplex signal (Fig. 2),
characterised in that
- in the control centre (100) means (203, 205, 206, 207, 208, 209, 210) are provided to combine the signals to be transmitted from the control centre (100) to a group of subscribers (111) to form a frequency division multiplex signal with subscriber-individual carrier frequencies for subscriber-individual signals,
- that at the subscriber stations (111) of the group means (123) are provided to modulate the signals to be transmitted to the control centre (100) onto carriers with subscriber-individual carrier frequencies,
- that means (122, 126, SK) are provided to convert the modulated carriers into optical signals with a second wavelength (λ1) uniform for all the subscribers of a group and to transmit said signals via the subscriber-individual optical waveguides (L₁ to L_{K}) to the common optical waveguide (112) and via the latter to the control centre,
- that in the control centre (100) devices (129, 119) are provided which convert the received mixture of optical signals into a mixture of electrical signals and demodulate the latter;
b) the control centre contains an electro-optical converter (120) which converts the frequency division multiplex signal into an optical signal by intensity modulation of the generated light;
c) at the subscriber station (111) demodulators (500, 501, 502, 503) are provided which from the frequency division multiplex signal recover the subscriber-individual information signals intended for the subscriber, and conversion devices (504) are provided which convert the recovered information signals into the original form (Fig. 3).

3. A system as claimed in one of the preceding claims, characterised in that the electro-optical converters (120, 122) which are used contain circuits for the linearisation of their characteristic curve.

4. A system as claimed in one of the preceding claims, characterised in that the frequency division multiplex signal is divided into a plurality of sub-bands, that for each of the sub-bands an electro-optical converter (W₁ to Wₙ) is provided which converts the sub-band into an optical signal, and that the optical signals which are thereby formed are input-coupled into the optical waveguide (112) and transmitted across the latter (Fig. 6).

5. A system as claimed in one of the preceding claims, characterised in that an optical or electrical loop (181) extends in parallel to an optical waveguide (112) via which an optical signal with a high power level is transmitted, and that in an electro-optical converter (120), which latter transmits into the optical waveguide, a monitoring device (180) is provided which transmits light or an electrical current across the loop and in the event of an interruption in the light path or current path switches off the opto-electrical converter (120) (Fig. 7).

6. A system as claimed in one of Claims 1 to 4, characterised in that a coupler (184) is inserted between an electro-optical converter (120), which transmits light into an optical waveguide (112), and the optical waveguide (112), which coupler (184) output-couples light reflected in the optical waveguide (112), that a detector (182) and a monitoring device (183) are provided which instigate the switching off of the electro-optical converter (120) when the level of the output-coupled reflected light exceeds a given threshold value (Fig. 8).

7. A system as claimed in Claim 6, characterised in that the coupler (184) also output-couples a part of the light transmitted from the electro-optical converter (120), that a detector is provided which converts the output-coupled light into an electrical signal, and that circuits are provided which use the electrical signal for an electrical negative feedback of the electro-optical converter and which set the operating point of the electro-optical converter on the basis of the low-frequency component of the electrical signal.

8. A system as claimed in one of the preceding claims, characterised in that the multiplex signal formed in the control centre (100) is, instead of a frequency division multiplex signal with subscriber-individual carrier frequencies for the subscriber-individual signals, a time division multiplex signal with subscriber-individual pulse frame time slots for the subscriber-individual signals.

9. A system as claimed in one of Claims 1 to 8, characterised in that the multiplex signal formed in the control centre (100) is, instead of a frequency division multiplex signal with subscriber-individual carrier frequencies for the subscriber-individual signals, a code division multiplex signal with subscriber-individual codes for the subscriber-individual signals.

10. A system as claimed in one of the preceding claims, characterised in that the signals to be transmitted from the subscriber group to the control centre, instead of modulating carriers with subscriber-individual carrier frequencies, are converted into digital signals with subscriber-individual codes, which digital signals are converted into optical signals instead of the modulated carriers and in accordance therewith, and are transmitted to the control centre.

11. A system as claimed in one of Claims 1 to 9, characterised in that the signals to be transmitted from the subscriber group to the control centre, instead of modulating carriers with subscriber-individual carrier frequencies, are converted into digital signals with active time slots assigned individually to the subscribers in a pulse frame, which digital signals are converted into optical signals instead of the modulated carriers and in accordance therewith, and are transmitted to the control centre.

## Revendications

1. Système de transmission optique de l'information pour la transmission dans les deux sens de signaux d'information entre un central (100) et des abonnés (111).
- dans le cas duquel lees abonnés sont regroupés en groupes,
- comportant des moyens pour regrouper dans le central (100) les signaux à transmettre du central (100) à un groupe d'abonnés (101) pour en faire un signal électrique multiplexé et le transmettre au voisinage de ces abonnés sous forme de signal optique d'une première longueur d'onde (λ₀), par l'intermédiaire d'un guide d'ondes lumineuses (112) commun au groupe d'abonnés,
- comportant des moyens optiques (SK) et des guides d'ondes lumineuses (L₁ à L_{K}), individuels par abonné, pour répartir aux abonnés le signal optique transmis,
- comportant des dispositifs (121, 123), existant chez chaque abonné (111), qui convertissent le signal optique reçu en un signal électrique et extraient, des signaux, individuels par abonné, le signal destiné à cet abonné,
- dans le cas duquel les guides d'ondes lumineuses (L₁ à L_{K}) sont également employés en multiplexage par répartition en longueurs d'ondes pour la transmission de signaux d'information, depuis les abonnés (111) vers le central (100), caractérisé par le fait
que dans le central (100) il y a des moyens (203, 205, 206, 207, 208, 209, 210) pour regrouper les signaux à transmettre du central (100) à un groupe d'abonnés (111) pour donner un signal multiplexé par répartition en fréquence avec des fréquences de la porteuse individuelles par abonné pour des signaux individuels par abonné,
- que si chez les abonnés (111) du groupe il y a des moyens (123) pour que des signaux à transmettre au central (100) modulent les porteuses avec des fréquences de la porteuse individuelles par abonné,
- qu'il y a des moyens (122, 126) pour convertir les porteuses, modulées, en signaux optiques d'une seconde longueur d'onde (λ₁) uniforme pour tous les abonnés d'un groupe et pour transmettre ces signaux, par l'intermédiaire des guides de longueurs d'ondes (L₁ à L_{K}) individuelles par abonné, au guide d'ondes lumineuses commun (112) et, par l'intermédiaire de celui-ci, au central,
- que dans le central (100) il y a des dispositifs (129, 119) qui convertissent le mélange, reçu, de signaux optiques en un mélange de signaux électriques et démodulent celui-ci.

2. Système selon la revendication 1 présentant les autres caractéristiques suivantes :
a) pour préparer le signal multiplexé par répartition en fréquence à transmettre, depuis le central (100), à un groupe d'abonnés, le central (100) contient :
- des dispositifs de modulation (203, 205) par lesquels les signaux d'information, individuels par abonné, à transmettre aux abonnés modulent des porteuses différentes avec des fréquences de la porteuse individuelles par abonné, et
- des dispositifs de multiplexage (206, 207, 208, 210) qui regroupent les porteuses, modulées, pour donner le signal multiplexé par répartition en fréquence (figure 2);
b) la centrale contient un convertisseur électro-optique (120) qui convertit en un signal optique le signal multiplexé par répartition en fréquence par modulation de l'intensité de la lumière produite;
c) chez l'abonné (111) il y a des démodulateurs (500, 501, 502, 503) qui, à partir du signal multiplexé par répartition en fréquence, récupèrent les signaux d'information, individuels par abonné, destinés à cet abonné et des dispositifs de conversion (504) qui convertissent en la forme d'origine les signaux d'information ainsi récupérés (figure 3).

3. Système selon l'une des revendications précédentes,
caractérisé par le fait que les convertisseurs électro-optiques employés (120, 122) contiennent des circuits pour linéariser leurs caractéristiques.

4. Système selon l'une des revendications précédentes,
caractérisé par le fait que l'on divise le signal multiplexé par répartition en fréquence en plusieurs bandes partielles, que pour chacune des bandes partielles il y a un convertisseur électro-optique (W₁ à Wₙ) qui convertit le signal en un signal optique et que les signaux optiques qui apparaissent alors sont couplés dans le guide d'ondes lumineuses (112) et transmis par l'intermédiaire de ce dernier (figure 6).

5. Système selon l'une des revendications précédentes,
caractérisé par le fait que parallèlement à un guide d'ondes lumineuses (112), par lequel est transmis un signal optique à haut niveau de puissance, court une boucle optique ou électrique (181) et que, prés d'un convertisseur électro-optique (120) émettant dans le guide d'ondes lumineuses il y a un dispositif de surveillance (180) qui émet de la lumière ou un courant électrique le long de la boucle et qui, en cas d'interruption du chemin lumineux ou du chemin du courant, met hors circuit le convertisseur opto-électrique (figure 7).

6. Système selon l'une des revendications 1 à 4, caractérisé par le fait qu'entre un convertisseur électro-optique (120) émettant de la lumière dans un guide d'ondes lumineuses (112) et le guide d'ondes lumineuses (112) est inséré un coupleur (184) qui découple la lumière réfléchie dans le guide d'ondes lumineuses (112), qu'il y a un détecteur (182) et un dispositif de surveillance (183) qui provoquent la mise hors circuit du convertisseur électro-optique (120) lorsque le niveau de la lumière réfléchie, découplée, dépasse une valeur de seuil prescrite (figure 8).

7. Système selon la revendication 6, caractérisé par le fait que le coupleur (184) couple également une partie de la lumière émise par le convertisseur électro-optique (120), qu'il y a un détecteur qui convertit la lumière ainsi découplée en un signal électrique et qu'il y a des circuits qui emploient le signal électrique pour un contre-couplage électrique du convertisseur électro-optique et qui, sur la base de la portion basse fréquence du signal électrique, règlent le point de travail du convertisseur électro-optique.

8. Système selon l'une des revendications précédentes, caractérisé par le fait que le signal multiplexé produit dans le central (100), au lieu d'être un signal multiplexé par répartition en fréquence avec des fréquences de la porteuse individuelles par abonné pour les signaux individuels par abonné, est un signal multiplexé par répartition dans le temps avec des intervalles de temps de séquence individuels par abonné pour les signaux individuels par abonné.

9. Système selon l'une des revendications 1 à 8, caractérisé par le fait que le signal multiplexé formé dans le central (100), au lieu d'être un signal multiplexé par répartition en fréquence avec fréquences porteuses individuelles par abonné pour les signaux individuels par abonné, est un signal multiplexé par répartition en code avec des codes individuels par abonné pour les signaux individuels par abonné.

10. Système selon l'une des revendications précédentes, caractérisé par le fait que les signaux à transmettre au central par le groupe d'abonnés, au lieu de moduler des porteuses à fréquences de la porteuse individuelles par abonné, sont convertis en signaux numériques avec codes individuels par abonné, qui sont convertis en signaux optiques au lieu de la porteuse modulée et de façon correspondante à celle-ci, et sont transmis au central.

11. Système selon l'une des revendications 1 à 9, caractérisé par le fait que les signaux à transmettre au central par un groupe d'abonnés, au lieu de moduler des porteuses à fréquences de la porteuse individuelles par abonné, sont convertis en signaux numériques avec intervalles de temps actifs correspondant individuellement à chaque abonné, rapporté à une séquence, signaux numériques qui sont convertis en signaux optiques au lieu de la porteuse modulée et en correspondance avec celle-ci, et sont transmis au central.
